# EUROPÄISCHE PATENTSCHRIFT

(11) **EP 2 438 320 B1**
(45) Veröffentlichungstag und Bekanntmachung des Hinweises auf die Patenterteilung: **26.06.2013**
(21) Anmeldenummer: 10720614.6
(22) Anmeldetag: 19.05.2010
(51) Int. Cl.: F16D 25/061

(54) **ANORDNUNG MIT ZUMINDEST EINER KLAUENKUPPLUNG**
ARRANGEMENT WITH AT LEAST ONE DOG CLUTCH
DISPOSITIF AVEC AU MOINS UN EMBRAYAGE POSITIF

(30) Priorität: 04.06.2009 DE 102009026708
(43) Veröffentlichungstag der Anmeldung: 11.04.2012
(73) Patentinhaber: ZF Friedrichshafen AG, 88038 Friedrichshafen (DE)
(72) Erfinder: ZIEMER, Peter, 88069 Tettnang (DE)
(86) Internationale Anmeldenummer: PCT/EP2010/056907
(87) Internationale Veröffentlichungsnummer: WO 2010/139557

(56) Entgegenhaltungen:
- DE-A1- 10 334 450
- US-A- 3 444 972
- US-A- 6 079 539

## Beschreibung

Die vorliegende Erfindung betrifft eine Anordnung mit zumindest einer Klauenkupplung gemäß der im Oberbegriff des Patentanspruches 1 näher definierten Art.

Aus der Fahrzeugtechnik sind Anordnungen mit zumindest einer Klauenkupplung als Schaltelement zum Verbinden einer Welle eines Getriebes mit einem Bauteil bekannt. Beispielsweise in der Druckschrift GB 2 368 102 A wird ein automatisches Getriebe mit einer Einrichtung zum Entkoppeln des Getriebes von einem Antriebsstrang eines Fahrzeuges beschrieben. Die Einrichtung ist als Klauenkupplung ausgebildet, welche hydraulisch über einen Betätigungskolben betätigt wird, der im Inneren einer Welle angeordnet ist. Der Betätigungskolben wird einseitig mit Druck beaufschlagt, um gegen eine Rückstellfeder bewegt zu werden. Zum Betätigen der Schaltklaue wird ein mit dem Betätigungskolben gekoppelter Schaltfinger verwendet, der durch eine Ausnehmung der Welle geführt wird.

Ferner ist aus der Druckschrift US 5 667 330 A eine weitere Anordnung mit einer Klauenkupplung als Schaltelement bekannt. Bei der bekannten Anordnung wird die Klauenkupplung verwendet, um eine Zapfwelle mit einer Getriebeausgangswelle eines Traktors zu verbinden. Dazu wird ein Betätigungskolben im Inneren der Ausgangswelle einseitig gegen eine Rückstellfeder hydraulisch beaufschlagt, wobei die Schaltklaue über einen Bolzen betätigt wird, der durch eine Ausnehmung der Ausgangswelle von dem Betätigungskolben zur Schaltklaue geführt wird.

Da bei den bekannten Anordnungen eine Rückstellfeder zum Rückstellen des Betätigungskolbens unbedingt erforderlich ist, wird ein nicht unerheblicher Bauraum zur Unterbringung der Rückstellfeder benötigt.

Eine gattungsgemäße Anordnung ist aus US-A-3 444 972 bekannt.

Der vorliegenden Erfindung liegt die Aufgabe zu Grunde, eine möglichst bauraumneutrale Anordnung einer Klauenkupplung in einem Getriebe vorzusehen.

Die Aufgabe wird erfindungsgemäß durch die Merkmale des Patentanspruches 1 gelöst. Weitere vorteilhafte Ausgestaltungen ergeben sich aus den Zeichnungen und den Unteransprüchen.

Demnach wird eine Anordnung mit zumindest einer Klauenkupplung oder dergleichen zur schaltbaren Kopplung und Entkopplung zwischen zumindest einer Welle und wenigstens einem Bauteil bei einem Getriebe vorgeschlagen, wobei zum Bewegen einer Schaltklaue der Klauenkupplung in einen geöffneten Zustand und einen geschlossenen Zustand ein Betätigungskolben oder dergleichen zumindest teilweise im Inneren der Welle axial bewegbar angeordnet ist. Erfindungsgemäß ist nun vorgesehen, dass der Betätigungskolben beidseitig mit Druckmittel beaufschlagbar ist, so dass der Betätigungskolben in beide Bewegungsrichtungen zum Öffnen und Schließen der Klauenkupplung hydraulisch betätigbar ist.

Die beidseitige hydraulische Betätigung hat unter anderem den Vorteil, dass eine Rückstellfeder nicht erforderlich ist. Zudem kann aufgrund des Entfalls der Rückstellfeder im geschalteten Zustand der Haltedruck bei der erfindungsgemäßen Anordnung niedriger eingestellt werden. Darüber hinaus kann ohne einen entsprechenden Druck im System der geschaltete beziehungsweise geschlossene Zustand und der abgeschaltete beziehungsweise geöffnete Zustand der Schaltklaue gehalten werden.

Vorzugsweise kann der Betätigungskolben bei der erfindungsgemäßen Anordnung in einer z.B. zentrisch im Inneren der zu koppelnden Welle, zum Beispiel der Antriebswelle eines Automatgetriebes in Planetenbauweise, geführt sein. Es sind jedoch auch andere Anordnungsmöglichkeiten des Betätigungskolbens denkbar.

Um auch den zweiten Kolbenraum zum Schließen der Klauenkupplung mit Druckmittel zu beaufschlagen, kann zumindest eine Öffnung oder dergleichen in der Nabe vorgesehen sein. Als Öffnung kann zumindest ein Druckmittel-Zuführungskanal ausgeführt sein, der einerseits mit dem Druckmittel Versorgungskanal und andererseits mit dem zweiten Kolbenraum verbunden ist.

Eine weitere Ausführungsvariante der Erfindung kann vorsehen, dass zur beidseitigen hydraulischen Betätigung des Betätigungskolbens dieser einen axialen Fortsatz oder dergleichen zur Lagerung an einer weiteren Welle aufweist, wobei der Fortsatz in einer mit einem Druckmittel-Versorgungskanal verbundenen Ausnehmung oder dergleichen gelagert ist. Die zur Lagerung des Betätigungskolbens vorgesehene Welle kann vorzugsweise als Abtriebswelle des Automatgetriebes ausgeführt sein. Alternativ könnte aber auch eine Lagerung an dem Gehäuse oder dergleichen erfolgen.

Eine Weiterbildung dieser Ausführungsvariante kann vorsehen, dass der Fortsatz etwa zapfenförmig ausgebildet ist. Bei dieser zapfenförmigen Ausgestaltung kann der Betätigungskolben eine axiale Durchführungsöffnung aufweisen, welche den ersten Kolbenraum mit der Ausnehmung zur Druckmittelversorgung verbindet. Der zweite Kolbenraum kann bei dieser Ausführungsvariante direkt mit einem weiteren Druckmittel-Versorgungskanal zur Druckmittelversorgung zum Schließen der Klauenkupplung verbunden werden.

Eine nächste Ausführungsvariante kann vorsehen, dass der Fortsatz als Vorsprung oder dergleichen ausgebildet ist, der in der Ausnehmung eine erste beaufschlagbare Fläche zum Öffnen der Klauenkupplung und eine zweite beaufschlagbare Fläche zum Schließen der Klauenkupplung an dem Vorsprung bildet. Zur Druckmittelversorgung beziehungsweise zur Druckmittelbeaufschlagung kann der der ersten beaufschlagbaren Fläche zugeordnete Kolbenraum mit einem ersten Druckmittel-Versorgungskanal und der der zweiten beaufschlagbaren Fläche zugeordnete Kolbenraum mit einem zweiten Druckmittel-Versorgungskanal verbunden sein.

Bei der vorgenannten Ausführungsvariante ergibt sich der Vorteil, dass kein Rohr für die Druckmittelversorgung erforderlich ist, welches durch den Betätigungskolben geführt ist.

Unabhängig von den jeweiligen Ausführungsvarianten kann vorgesehen sein, dass die Schaltklaue koaxial zur Antriebswelle, beispielsweise an ihrem äußeren Umfang anliegt, wobei der Betätigungskolben vorzugsweise im Inneren der Antriebswelle, z.B. in einer Bohrung oder dergleichen angeordnet ist. Bei dieser Ausführung kann vorzugsweise vorgesehen sein, dass die Schaltklaue über zumindest einen durch die Antriebswelle ragenden Bolzen oder dergleichen, der mit dem Betätigungskolben verbunden beziehungsweise gekoppelt ist, betätigt wird. Es sind auch andere Betätigungsarten der Schaltklaue möglich.

Eine andere Variante zur Betätigung der Schaltklaue kann vorsehen, dass der Betätigungskolben über mehrere radial durch die Antriebswelle hindurchragende Mitnahmefinger mit der Schaltklaue zur Axialbewegung gekoppelt ist. Beispielsweise können die Mitnahmefinger quasi ein Ankerblech oder dergleichen bilden, deren radialer Steg durch den Mitnahmefinger gebildet wird. Vorzugsweise sind mehrere am Umfang in einem vorbestimmten Winkel zueinander verteilt angeordnete Mitnahmefinger vorgesehen. Auf diese Weise kann eine flächige Anlage sowohl an der Schaltklaue als auch an dem Betätigungskolben realisiert werden, wodurch ein Verkippen oder Verklemmen sicher vermieden wird.

Vorzugsweise kann zwischen dem Innendurchmesser der Bohrung in der Antriebswelle und dem Außendurchmesser des Betätigungskolbens eine Spielpassung vorgesehen sein. Auf diese Weise wird einerseits eine freie Bewegung des Betätigungskolbens realisiert und andererseits eine Abdichtung zwischen den Druckmittelströmen zum Schließen und Öffnen der Schaltklaue, also zum Koppeln und Entkoppeln der Antriebswelle mit dem Bauteil des Planetenradsatzes vorgesehen.

Unabhängig von den jeweiligen Ausführungsvarianten kann die Schaltklaue und das korrespondierende Gegenstück an dem zu schaltenden Bauteil zum Beispiel über eine gemeinsame Kronverzahnung oder auch über eine gemeinsame Steckverzahnung oder dergleichen verbunden werden.

Gemäß einer vorteilhaften Weiterbildung können die Kronverzahnung oder auch die Steckverzahnung der Schaltklauenhälften ballig und/oder konisch bzw. mit Hinterschnitt und/oder stirnseitig mit einer Fase oder einem Radius und/oder mit einem Zentrierkonus ausgeführt werden.

Vorzugsweise kann ein Hohlrad oder ein Sonnenrad als Bauteil des Planetenradsatzes mit der Schaltklaue und damit mit der Antriebswelle oder dergleichen gekoppelt werden. Es können aber auch andere Bauteile des Planetenradsatzes mit der Schaltklaue geschaltet werden.

Es ist auch möglich, dass die Schaltklaue über eine Steckverzahnung mit der Antriebswelle drehfest verbunden und damit auch zentriert ist. Das korrespondierende Gegenstück der Schaltklaue zum Beispiel an dem Hohlrad des Planetenradsatzes ist vorzugsweise über ein Gleitlager oder dergleichen auf der Antriebswelle gelagert.

Unabhängig von der jeweiligen Ausführungsvariante können bei der erfindungsgemäßen Anordnung zum Beispiel Federelemente vorgesehen sein, die eine Vorpositionierung des Betätigungskolbens im drucklosen Zustand ermöglichen. Zum Beispiel kann eine Druckfeder im Kolbenraum für den geöffneten Zustand der Schaltklaue beziehungsweise für den geschlossenen Zustand der Schaltklaue verwendet werden.

Nachfolgend wird die vorliegende Erfindung anhand der Zeichnungen weiter erläutert. Es zeigen:
- Fig. 1: eine schematische, geschnittene Teilansicht einer ersten möglichen Ausführungsvariante einer erfindungsgemäßen Anordnung mit einer Klauenkupplung in einem Automatgetriebe in Planetenbauweise;
- Fig. 2: eine schematische, geschnittene Teilansicht entlang der Schnittlinie A-A gemäß Figur 1;
- Fig. 3: eine schematische, geschnittene Teilansicht entlang der Schnittlinie B-B gemäß Figur 1;
- Fig. 4: eine schematische, geschnittene Teilansicht einer Variante der Schaltklauenmitnahme bei der Anordnung;
- Fig. 5: eine schematische, geschnittene Ansicht entlang der Schnittlinie C-C gemäß Figur 4.
- Fig. 6: eine schematische, geschnittene Teilansicht einer zweiten Ausführungsvariante der Anordnung; und
- Fig. 7: eine schematische, geschnittene Teilansicht einer dritten Ausführungsvariante der Anordnung.

In den Figuren sind verschiedene Ausführungsvarianten einer erfindungsgemäßen Anordnung mit einer Klauenkupplung zum schaltbaren Koppeln und Entkoppeln einer Antriebswelle 1 eines Automatgetriebes in Planetenbauweise mit zumindest einem Bauteil des Planetenradsatzes 4 exemplarisch dargestellt, wobei als zu verbindendes Bauteil beispielhaft ein Hohlrad 2 oder ein Sonnenrad 3 des Planetenradsatzes 4 verwendet wird, welches über die die Schaltklaue 9 der Klauenkupplung mit der Antriebswelle 1 koppelbar ist. Gleiche Bauteile sind mit denselben Bezugszeichen in den verschiedenen Figuren bezeichnet.

Die Klauenkupplung ist zentrisch im Wesentlichen innerhalb eines Sonnenrades 3 des Planetenradsatzes 4 angeordnet, um eine bauraumneutrale Anordnung der Klauenkupplung in dem Automatgetriebe zu realisieren.

Unabhängig von den jeweiligen Ausführungsvarianten ist erfindungsgemäß vorgesehen, dass eine beidseitige hydraulische Betätigung der Klauenkupplung vorgesehen ist, wobei die Druckmittelzuführung in vorteilhafter Weise nur von einer Seite erfolgt. Dadurch ergibt sich eine besonders bauraumgünstige Anordnung. Ferner bietet die ausschließlich hydraulische Betätigung gegenüber einseitigen hydraulischen Betätigungen mit Rückstellfeder unter anderem den Vorteil, dass im geschalteten Zustand der Haltedruck niedriger sein kann und dass ohne Druck im System der geschaltete beziehungsweise abgeschaltete Zustand gehalten werden kann.

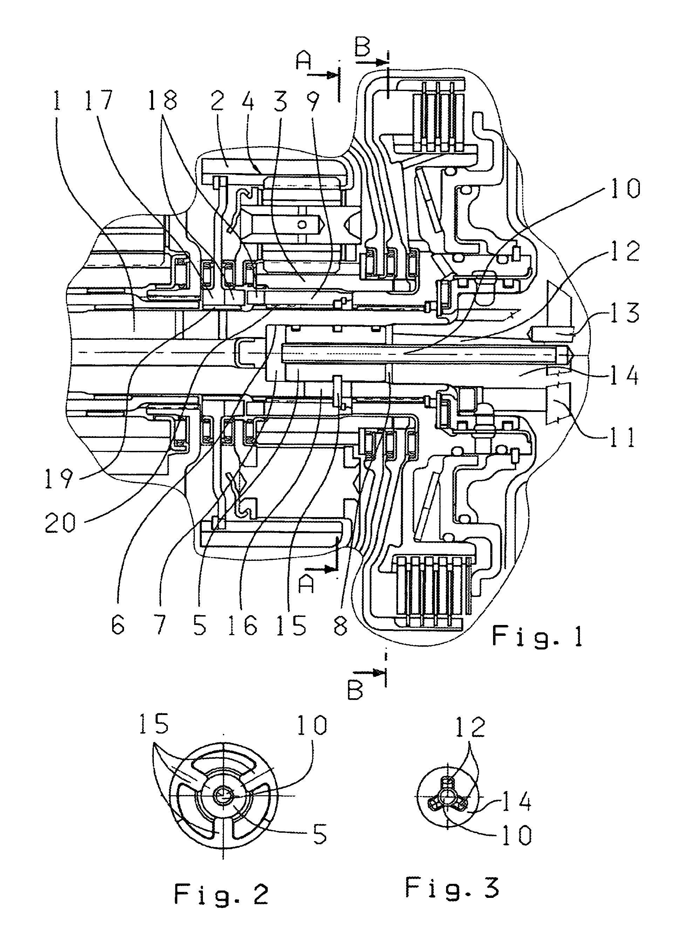

In den Figuren 1 bis 3 ist eine erste Ausführungsvariante der Anordnung dargestellt. Wie bereits erwähnt, wird eine beidseitige hydraulische Betätigung des Betätigungskolbens 5 in beide Bewegungsrichtungen realisiert, wobei die Ansteuerung jedoch nur von einer Seite erfolgt.

Der Betätigungskolben 5 ist in einer zentrisch im Inneren der Antriebswelle 1 vorgesehenen Bohrung 6 axial verschiebbar gelagert. In der Bohrung 6 wird ein erster Kolbenraum 7 und ein zweiter Kolbenraum 8 gebildet, wobei durch eine Druckbeaufschlagung des ersten Kolbenraumes 7 der Betätigungskolben 5 in der Zeichnungsebene nach rechts bewegt wird, so dass die Klauenkupplung geöffnet beziehungsweise die Schaltklaue 9 der Klauenkupplung in einen geöffneten Zustand bewegt wird, und wobei durch eine Druckbeaufschlagung des zweiten Kolbenraumes 8 der Betätigungskolben 5 in der Zeichnungsebene nach links bewegt wird, so dass die Klauenkupplung geschlossen beziehungsweise die Schaltklaue 9 in einen geschlossenen Zustand bewegt wird.

Zur Druckbeaufschlagung des ersten Kolbenraumes 7 wird ein Rohr 10 in einen gehäusefesten Deckel 14 beziehungsweise Zapfen als Nabe zur Lagerung der Antriebswelle 1 eingepresst. Das Rohr 10 ist derart angeordnet, dass es durch den Betätigungskolben 5 geführt wird. Somit verbindet das Rohr 10 (Klaue auf) den ersten Kolbenraum 7 mit einem Druckmittel-Versorgungskanal 11. Auf diese Weise kann eine Druckmittelversorgung des ersten Kolbenraumes 7 sichergestellt werden, um den Betätigungskolben 5 bei Bedarf in der Zeichnungsebene nach rechts zu bewegen, um dadurch die Schaltklaue 9 in ihre geöffnete Position beziehungsweise in ihre entkoppelte Position zu bringen. Ferner sind in dem Deckel 14 weitere Zuführkanäle 12 (Klaue zu) vorgesehen, die Druckmittel in den zweiten Kolbenraum 8 führen, um den Betätigungskolben 5 bei Druckbeaufschlagung in der Zeichnungsebene nach links zu bewegen, wodurch die Schaltklaue 9 in ihre geschlossene Position beziehungsweise in ihre gekoppelte Position gebracht wird. Die Zuführkanäle 12 sind über einen weiteren Druckmittel-Versorgungskanal 13 an die Druckmittelversorgung angeschlossen. Als Druckmittel kann z. B. Öl, insbesondere das Schmier- oder Kühlöl des Getriebes verwendet werden.

Wie aus Figur 3 ersichtlich ist, sind drei über den Umfang der Nabe bzw. des Deckels 14 verteilt angeordnete Zuführkanäle 12 vorgesehen, die radial außen an dem Rohr 10 in axialer Richtung verlaufen, um den zweiten Kolbenraum 8 mit dem weiteren Druckmittel-Versorgungskanal 13 zur Druckmittelversorgung zu verbinden.

Die Übertragung der Bewegung des Betätigungskolbens 5 kann wie insbesondere aus Figur 1 und 2 deutlich wird, über z.B. drei Mitnahmefinger 15 erfolgen. Die Mitnahmefinger 15 können radial durch ein Langloch 16 an der Antriebswelle 1 durchgreifen, um die Schaltklaue 9 axial zu bewegen. Dadurch, dass drei Mitnahmefinger 15 vorgesehen sind, kann ein Verkippen beziehungsweise Verklemmen bei der Bewegungsübertragung vermieden werden. Die Schaltklaue 9 und das korrespondierende Gegenstück 17 an dem Hohlrad 2 weisen eine gemeinsame Kronverzahnung 18 auf. Das Gegenstück 17 an dem Hohlrad 2 ist über ein Gleitlager 19 auf der Antriebswelle 1 gelagert. Die Schaltklaue 9 ist über eine gemeinsame Steckverzahnung 20 mit der Antriebswelle 1 drehfest aber axial verschiebbar verbunden und auf dieser zentriert.

Aus Figur 2 wird zudem ersichtlich, dass die Mitnahmefinger 15 eine etwa ankerförmige Ausgestaltung aufweisen. Aufgrund der konstruktiven Form der Mitnahmefinger 22 ergibt sich quasi eine flächige Anlage sowohl an der Schaltklaue 9 als auch an dem Betätigungskolben 5.

Aus Figur 3 wird deutlich, dass in dem Deckel 14 drei Zuführkanäle 12 vorgesehen sind, um die rechte Seite beziehungsweise den zweiten Druckraum 8 des Betätigungskolbens 5 mit Druckmittel zu beaufschlagen, um die Schaltklaue 9 mit dem Hohlrad 2 zu verbinden. Die Zuführkanäle 12 sind in einem Winkel von 120° zueinander versetzt angeordnet.

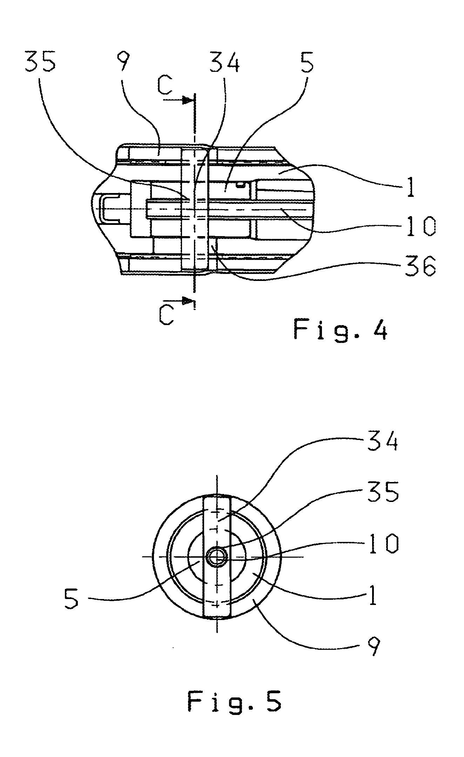

Eine weitere Möglichkeit zur Bewegungsübertragung zwischen dem Betätigungskolben 5 und der Schaltklaue 9 ist beispielhaft in den Figuren 4 und 5 dargestellt. Bei dieser Art der Klauenmitnahme ist ein Bolzen 34 vorgesehen, der mit dem Betätigungskolben 5 verbunden ist und radial durch zwei Öffnungen 36 in der Antriebswelle 1 hindurch greift, um mit der Schaltklaue 9 zur axialen Bewegung derselben gekoppelt zu sein. Der Bolzen 34 weist zudem eine Querbohrung 35 auf durch die das Rohr 10 geführt ist. Wenn der Betätigungskolben 5 axial bewegt wird, kann die Schaltklaue 9 über den Bolzen 34 entsprechend mit bewegt werden.

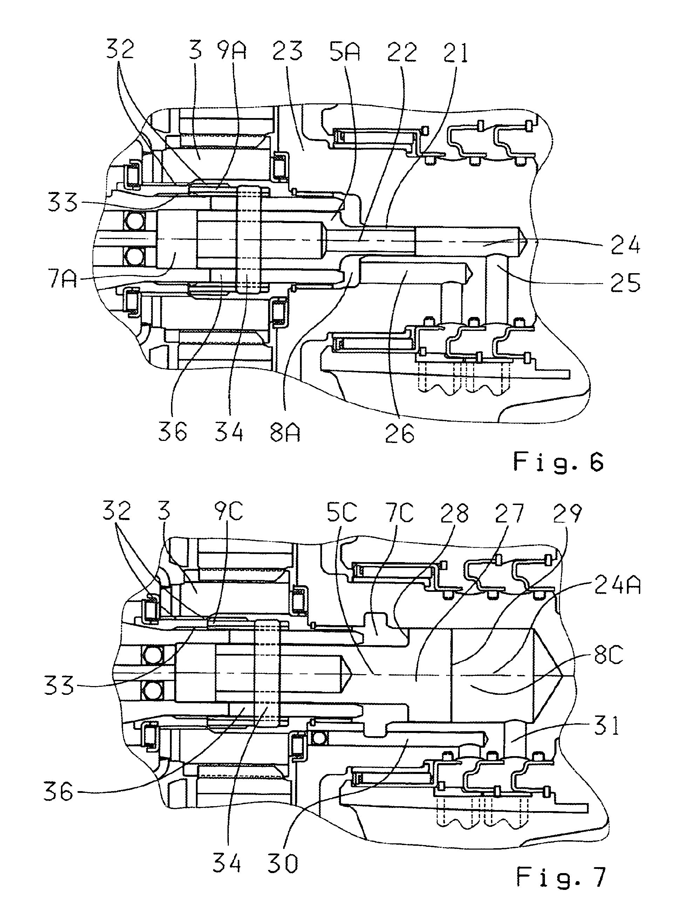

In Figur 6 ist eine weitere Ausführungsvariante der erfindungsgemäßen Anordnung zur beidseitigen hydraulischen Betätigungen der Klauenkupplung dargestellt. Bei der zweiten Ausführungsvariante weist der Betätigungskolben 5A einen Fortsatz in Form eines Zapfens 21 auf. Auf diese Weise wird der Betätigungskolben 5A über den Zapfen 21 in einer Ausnehmung 24 einer weiteren Welle gelagert. Diese weitere Welle ist in Figur 6 beispielhaft eine Abtriebswelle 23 des dargestellten Automatgetriebes. Somit rotiert der Betätigungskolben 5A mit dem Zapfen 21 in der Abtriebswelle 23. Der Betätigungskolben 5 A weist zudem eine axiale Durchführungsöffnung 22 auf, die die Ausnehmung 24, welche mit einem Druckmittel-Versorgungskanal 25 verbunden ist, durch den Betätigungskolben 5A mit dem ersten Kolbenraum 7A verbindet. Auf diese Weise kann Druckmittel aus dem Versorgungskanal 25 durch die Durchführungsöffnung 22 durch den Betätigungskolben 5A hindurch in den ersten Kolbenraum 7A geführt werden, so dass der Betätigungskolben 5A aufgrund der Druckbeaufschlagung in der Zeichnungsebene nach rechts bewegt wird, so dass die Schaltklaue 9A in ihren geöffneten Zustand gebracht wird.

Um bei der zweiten Ausführungsvariante gemäß Figur 6 den Betätigungskolben 5A in der Zeichnungsebene nach links zu bewegen, ist ein weiterer Druckmittel-Versorgungskanal 26 vorgesehen, der den zweiten Kolbenraum 8A mit der Druckmittelversorgung verbindet. Bei einer Beaufschlagung des zweiten Kolbenraumes 8A kann der Betätigungskolben 5A beziehungsweise die Schaltklaue 9A in der Zeichnungsebene nach links bewegt werden, um diese in ihren geschlossenen Zustand zu bewegen.

Bei der dritten Ausführungsvariante gemäß Figur 7 ist im Unterschied zur zweiten Ausführungsvariante der Fortsatz an dem Betätigungskolben 5C als Vorsprung 27 ausgebildet. Auf diese Weise wird in der Ausnehmung 24A eine erste beaufschlagbare Fläche 28 bzw. Ringfläche an dem Vorsprung 27 in der Zeichnungsebene links gebildet. Zudem wird an der gegenüberliegenden Seite des Vorsprungs 27 eine zweite beaufschlagbare Fläche 29 in der Zeichnungsebene rechts gebildet. Der der ersten beaufschlagbaren Fläche 28 zugeordnete Kolbenraum 7C wird über einen Druckmittel-Versorgungskanal 30 mit Druckmittel versorgt. Der der zweiten beaufschlagbaren Fläche 29 zugeordnete Kolbenraum 8C wird über einen weiteren Druckmittel- Versorgungskanal 31 mit Druckmittel versorgt. Auf diese Weise kann zum Öffnen der Klauenkupplung der Kolbenraum 7C über den Versorgungskanal 30 mit Druckmittel beaufschlagt werden, so dass sich der Betätigungskolben 5C in der Zeichnungsebene nach rechts bewegt. Wenn der Kolbenraum 8C über den Versorgungskanal 31 mit Druckmittel beaufschlagt wird, kann der Betätigungskolben 5C in der Zeichnungsebene nach links bewegt werden, um die Klauenkupplung zu schließen. In vorteilhafter Weise kann aufgrund der großen beaufschlagbaren Fläche 29 an dem Vorsprung 27 eine entsprechend große Kraft zum Schließen der Schaltklaue 9C aufgebracht werden.

Bei der zweiten und der dritten Ausführungsvariante gemäß den Figuren 6 und 7 wird die Antriebswelle 1 über die Schaltklaue 9A, 9C beispielhaft mit dem Sonnenrad 3 des Planetenradsatzes verbunden. Dazu weist das Sonnenrad 3 und die Schaltklaue 9A, 9C eine gemeinsame Steckverzahnung 32 auf. Die Schaltklaue 9A, 9C ist über eine weitere Steckverzahnung 33 drehfest, jedoch axial verschiebbar mit der Antriebswelle 1 verbunden.

### Bezugszeichen

| | |
|---|---|
| 1 | Antriebswelle |
| 2 | Hohlrad |
| 3 | Sonnenrad |
| 4 | Planetenradsatz |
| 5 | Betätigungskolben |
| 5A | Betätigungskolben |
| 5C | Betätigungskolben |
| 6 | Bohrung |
| 7 | erster Kolbenraum |
| 7A | erster Kolbenraum |
| 7C | erster Kolbenraum |
| 8 | zweiter Kolbenraum |
| 8A | zweiter Kolbenraum |
| 8C | zweiter Kolbenraum |
| 9 | Schaltklaue |
| 9A | Schaltklaue |
| 9C | Schaltklaue |
| 10 | Rohr |
| 11 | Versorgungskanal |
| 12 | Zuführkanal |
| 13 | Versorgungskanal |
| 14 | gehäusefester Deckel beziehungsweise Nabe |
| 15 | Mitnahmefinger |
| 16 | Langloch |
| 17 | Gegenstück an dem Hohlrad |
| 18 | Kronverzahnung |
| 19 | Gleitlager |
| 20 | Steckverzahnung |
| 21 | Zapfen |
| 22 | Durchführungsöffnung |
| 23 | Abtriebswelle |
| 24 | Ausnehmung |
| 24A | Ausnehmung |
| 25 | Versorgungskanal |
| 26 | Versorgungskanal |
| 27 | Vorsprung |
| 28 | erste beaufschlagbare Fläche beziehungsweise Ringfläche |
| 29 | zweite beaufschlagbare Fläche |
| 30 | Versorgungskanal |
| 31 | Versorgungskanal |
| 32 | Steckverzahnung |
| 33 | Steckverzahnung |
| 34 | Bolzen |
| 35 | Querbohrung |
| 36 | Öffnung |

## Patentansprüche

1. Anordnung mit zumindest einer Klauenkupplung zur schaltbaren Kopplung und Entkopplung zwischen zumindest einer Welle und wenigstens einem Bauteil bei einem Getriebe, wobei zum Bewegen einer Schaltklaue (9, 9A, 9C) der Klauenkupplung in einen geöffneten Zustand und einen geschlossenen Zustand ein Betätigungskolben (5, 5A, 5C) zumindest teilweise im Inneren der Welle axial bewegbar anordnet ist, wobei der Betätigungskolben (5, 5A, 5C) beidseitig mit Druckmittel beaufschlagbar ist, so dass der Betätigungskolben (5, 5A, 5C), welcher in einer zentrisch im Inneren der Welle vorgesehenen Bohrung (6) zumindest teilweise geführt ist, in beide Bewegungsrichtungen hydraulisch betätigbar ist, wobei zum Öffnen der Klauenkupplung ein einer gehäusefesten Nabe (14) abgewandter erster Kolbenraum (7, 7A, 7C) des Betätigungskolbens (5, 5A, 5C) und zum Schließen der Klauenkupplung ein der Nabe (14) zugewandter zweiter Kolbenraum (8, 8A, 8C) des Betätigungskolbens (5, 5A, 5C) mit Druckmittel beaufschlagbar ist, **dadurch gekennzeichnet, dass** ein mit einem Druckmittel-Versorgungskanal (11) verbundenes Rohr (10) in die Nabe (14) eingepresst ist und durch den Betätigungskolben (6) in den ersten Kolbenraum (7) geführt ist, um den Betätigungskolben (5) zum Öffnen der Klauenkupplung mit Druckmittel zu beaufschlagen.

2. Anordnung nach Anspruch 1, **dadurch gekennzeichnet, dass** der Betätigungskolben (5, 5A, 5C) in einer zentrisch im Inneren der Welle vorgesehenen Bohrung (6) zumindest teilweise geführt ist.

3. Anordnung nach Anspruch 1, **dadurch gekennzeichnet, dass** zumindest eine Öffnung in der Nabe (14) vorgesehen ist, um den Betätigungskolben (5) zum Schließen der Klauenkupplung mit Druckmittel zu beaufschlagen.

4. Anordnung nach Anspruch 3, **dadurch gekennzeichnet, dass** in der Nabe (14) als Öffnung zumindest ein Druckmittel-Zuführungskanal (12) vorgesehen ist, der einerseits mit einem Druckmittel-Versorgungskanal (13) und andererseits mit dem zweiten Kolbenraum (8) verbunden ist.

5. Anordnung nach einem der vorangehenden Ansprüche, **dadurch gekennzeichnet, dass** der Betätigungskolben (5A, 5C) einen axialen Fortsatz zur Lagerung an einer weiteren Welle aufweist, wobei der Fortsatz in einer mit einem Druckmittel-Versorgungskanal (25, 31) verbundenen Ausnehmung (24, 24A) gelagert ist.

6. Anordnung nach Anspruch 5, **dadurch gekennzeichnet, dass** der Fortsatz etwa zapfenförmig ausgebildet ist.

7. Anordnung nach Anspruch 5 oder 6, **dadurch gekennzeichnet, dass** der Betätigungskolben (5A) eine axiale Durchführungsöffnung (22) aufweist, welche den ersten Kolbenraum (7A) mit der Ausnehmung (24) zur Druckmittelversorgung verbindet.

8. Anordnung nach einem der Ansprüche 5 bis 7, **dadurch gekennzeichnet, dass** der zweite Kolbenraum (8A) mit einem weiteren Druckmittel-Versorgungskanal (26) zur Druckmittelversorgung zum Schließen der Klauenkupplung verbunden ist.

9. Anordnung nach Anspruch 5, **dadurch gekennzeichnet, dass** der Fortsatz als Vorsprung (27) ausgebildet ist, der in der Ausnehmung (24A) eine erste beaufschlagbare Fläche (28) zum Öffnen der Klauenkupplung und eine zweite beaufschlagbare Fläche (29) zum Schließen der Klauenkupplung bildet.

10. Anordnung nach Anspruch 8 oder 9, **dadurch gekennzeichnet, dass** der der ersten beaufschlagbaren Fläche (28) zugeordnete Kolbenraum (7C) mit einem Druckmittel-Versorgungskanal (30) und dass der der zweiten beaufschlagbaren Fläche (29) zugeordnete Kolbenraum (8C) mit einem Druckmittel-Versorgungskanal (31) verbunden ist.

11. Anordnung nach einem der vorangehenden Ansprüche, **dadurch gekennzeichnet, dass** der Betätigungskolben (5, 5A, 5C) über mehrere radial durch die Antriebswelle (1) hindurchragende Mitnahmefinger (15) mit der Schaltklaue (9, 9A, 9C) zur axialen Bewegung gekoppelt ist.

12. Anordnung nach einem der Ansprüche 1 bis 10, **dadurch gekennzeichnet, dass** die Schaltklaue (9, 9A, 9C) über zumindest einen durch die Antriebswelle (1) ragenden Bolzen (34) des Betätigungskolbens (5, 5A, 5C) betätigbar ist.

13. Anordnung nach einem der vorangehenden Ansprüche, **dadurch gekennzeichnet, dass** die Schaltklaue (9, 9A, 9C) und das korrespondierende Gegenstück (17) an dem zu schaltenden Hohlrad (2) über eine gemeinsame Kronverzahnung (18) verbindbar sind.

14. Anordnung nach einem der Ansprüche 1 bis 12, **dadurch gekennzeichnet, dass** die Schaltklaue (5B) und das korrespondierende Gegenstück an dem zu schaltenden Sonnenrad (3) über eine gemeinsame Steckverzahnung (32) verbindbar sind.

15. Anordnung nach Anspruch 13 oder 14, **dadurch gekennzeichnet, dass** die Kronverzahnung (18) oder die Steckverzahnung (32) ballig und/oder konisch oder mit Hinterschnitt und/oder stirnseitig mit einer Fase oder einem Radius und/oder mit einem Zentrierkonus ausgeführt sind.

16. Anordnung nach einem der vorangehenden Ansprüche, **dadurch gekennzeichnet, dass** die Schaltklaue (9, 9A, 9C) über eine Steckverzahnung (33) mit der Antriebswelle (1) drehfest und axial verschiebbar verbunden ist.

17. Anordnung nach einem der vorangehenden Ansprüche, **dadurch gekennzeichnet, dass** über die Klauenkupplung als Welle eine Antriebswelle (1) mit einem Hohlrad (2) oder einem Sonnenrad (3) des Planetenradsatzes (4) eines Automatgetriebes schaltbar verbindbar ist.

## Claims

1. Arrangement having at least one dog clutch for switchably coupling and decoupling between at least one shaft and at least one component in a gear mechanism, an actuating piston (5, 5A, 5C) being arranged such that it can be moved axially at least partially in the interior of the shaft in order to move a shifting dog (9, 9A, 9C) of the dog clutch into an open state and a closed state, it being possible for the actuating piston (5, 5A, 5C) to be loaded with pressure medium on both sides, with the result that the actuating piston (5, 5A, 5C) which is guided at least partially in a bore (6) which is provided centrally in the interior of the shaft can be actuated hydraulically in both movement directions, it being possible for a first piston space (7, 7A, 7C) of the actuating piston (5, 5A, 5C), which first piston space (7, 7A, 7C) faces away from a hub (14) which is fixed on the housing, to be loaded with pressure medium in order to open the dog clutch, and it being possible for a second piston space (8, 8A, 8C) of the actuating piston (5, 5A, 5C), which second piston space (8, 8A, 8C) faces the hub (14), to be loaded with pressure medium in order to close the dog clutch, **characterized in that** a tube (10) which is connected to a pressure-medium supply channel (11) is pressed into the hub (14) and is guided through the actuating piston (6) into the first piston space (7), in order to load the actuating piston (5) with pressure medium in order to open the dog clutch.

2. Arrangement according to Claim 1, **characterized in that** the actuating piston (5, 5A, 5C) is guided at least partially in a bore (6) which is provided centrally in the interior of the shaft.

3. Arrangement according to Claim 1, **characterized in that** at least one opening is provided in the hub (14), in order to load the actuating piston (5) with pressure medium in order to close the dog clutch.

4. Arrangement according to Claim 3, **characterized in that** at least one pressure-medium feed channel (12) which is connected on one side to a pressure-medium supply channel (13) and on the other side to the second piston space (8) is provided as opening in the hub (14).

5. Arrangement according to one of the preceding claims, **characterized in that** the actuating piston (5A, 5C) has an axial projection for mounting on a further shaft, the projection being mounted in a recess (24, 24A) which is connected to a pressure-medium supply channel (25, 31).

6. Arrangement according to Claim 5, **characterized in that** the projection is of approximately journal-shaped configuration.

7. Arrangement according to Claim 5 or 6, **characterized in that** the actuating piston (5A) has an axial leadthrough opening (22) which connects the first piston space (7A) to the recess (24) for the supply of pressure medium.

8. Arrangement according to one of Claims 5 to 7, **characterized in that** the second piston space (8A) is connected to a further pressure-medium supply channel (26) for the supply of pressure medium in order to close the dog clutch.

9. Arrangement according to Claim 5, **characterized in that** the projection is configured as a lug (27) which forms a first loadable face (28) in order to open the dog clutch and a second loadable face (29) in order to close the dog clutch in the recess (24A).

10. Arrangement according to Claim 8 or 9, **characterized in that** the piston space (7C) which is assigned to the first loadable face (28) is connected to a pressure-medium supply channel (30), and **in that** the piston space (8C) which is assigned to the second loadable face (29) is connected to a pressure-medium supply channel (31) .

11. Arrangement according to one of the preceding claims, **characterized in that** the actuating piston (5, 5A, 5C) is coupled to the shifting dog (9, 9A, 9C) for the axial movement via a plurality of driving fingers (15) which protrude radially through the drive shaft (1).

12. Arrangement according to one of Claims 1 to 10, **characterized in that** the shifting dog (9, 9A, 9C) can be actuated via at least one pin (34) of the actuating piston (5, 5A, 5C), which pin (34) protrudes through the drive shaft (1).

13. Arrangement according to one of the preceding claims, **characterized in that** the shifting dog (9, 9A, 9C) and the corresponding counterpart (17) on the internal gear (2) to be shifted can be connected via a common crown toothing system (18).

14. Arrangement according to one of Claims 1 to 12, **characterized in that** the shifting dog (5B) and the corresponding counterpart on the sun gear (3) to be shifted can be connected via a common intermeshing toothing system (32).

15. Arrangement according to Claim 13 or 14, **characterized in that** the crown toothing system (18) or the intermeshing toothing system (32) is configured spherically and/or conically or with an undercut and/or on the end side with a bevel or a radius and/or with a centring cone.

16. Arrangement according to one of the preceding claims, **characterized in that** the shifting dog (9, 9A, 9C) is connected axially displaceably and fixedly to the drive shaft (1) so as to rotate with it via an intermeshing toothing system (33).

17. Arrangement according to one of the preceding claims, **characterized in that** a drive shaft (1) can be connected in a switchable manner via the dog clutch as shaft to an internal gear (2) or a sun gear (3) of the planetary gear set (4) of an automatic gearbox.

## Revendications

1. Agencement comprenant au moins un embrayage à griffes pour l'accouplement et le désaccouplement commutables entre au moins un arbre et au moins un composant dans une boîte de vitesses, un piston d'actionnement (5, 5A, 5C) étant disposé de manière déplaçable axialement au moins en partie à l'intérieur de l'arbre pour le déplacement d'un crabot d'accouplement (9, 9A, 9C) de l'embrayage à crabot dans un état ouvert et un état fermé, le piston d'actionnement (5, 5A, 5C) pouvant être sollicité des deux côtés avec du fluide sous pression, de telle sorte que le piston d'actionnement (5, 5A, 5C), qui est guidé au moins partiellement dans un alésage (6) prévu centralement à l'intérieur de l'arbre, puisse être actionné hydrauliquement dans les deux sens de déplacement, un premier espace de piston (7, 7A, 7C) du piston d'actionnement (5, 5A, 5C) opposé à un moyeu (14) fixé au boîtier pouvant être sollicité avec du fluide sous pression pour l'ouverture de l'embrayage à crabot et un deuxième espace de piston (8, 8A, 8C) du piston d'actionnement (5, 5A, 5C) tourné vers le moyeu (14) pouvant être sollicité avec du fluide sous pression pour la fermeture de l'embrayage à crabot, **caractérisé en ce qu'**un tube (10) connecté à un canal d'alimentation en fluide sous pression (11) est enfoncé dans le moyeu (14) et est guidé à travers le piston d'actionnement (6) dans le premier espace de piston (7), afin de solliciter le piston d'actionnement (5) avec du fluide sous pression en vue de l'ouverture de l'embrayage à crabot.

2. Agencement selon la revendication 1, **caractérisé en ce que** le piston d'actionnement (5, 5A, 5C) est guidé au moins en partie dans un alésage (6) prévu centralement à l'intérieur de l'arbre.

3. Agencement selon la revendication 1, **caractérisé en ce qu'**au moins une ouverture est prévue dans le moyeu (14), afin de solliciter avec du fluide sous pression le piston d'actionnement (5) en vue de fermer l'embrayage à crabot.

4. Agencement selon la revendication 3, **caractérisé en ce qu'**au moins un fluide sous pression (12) est prévu dans le moyeu (14) en tant qu'ouverture, lequel est connecté d'une part à un canal d'alimentation en fluide sous pression (13) et d'autre part au deuxième espace de piston (8).

5. Agencement selon l'une quelconque des revendications précédentes, **caractérisé en ce que** le piston d'actionnement (5A, 5C) présente une saillie axiale pour le support sur palier sur un arbre supplémentaire, la saillie étant supportée dans un évidement (24, 24A) connecté à un canal d'alimentation en fluide sous pression (25, 31).

6. Agencement selon la revendication 5, **caractérisé en ce que** la saillie est réalisée approximativement en forme de tourillon.

7. Agencement selon la revendication 5 ou 6, **caractérisé en ce que** le piston d'actionnement (5A) présente une ouverture de passage axiale (22), qui relie le premier espace de piston (7A) à l'évidement (24) en vue de l'alimentation en fluide sous pression.

8. Agencement selon l'une quelconque des revendications 5 à 7, **caractérisé en ce que** le deuxième espace de piston (8A) est connecté à un canal d'alimentation en fluide sous pression supplémentaire (26) pour l'alimentation en fluide sous pression en vue de la fermeture de l'embrayage à crabot.

9. Agencement selon la revendication 5, **caractérisé en ce que** la saillie est réalisée sous forme de projection (27) qui forme dans l'évidement (24A) une première surface pouvant être sollicitée (28) pour l'ouverture de l'embrayage à crabot et une deuxième surface pouvant être sollicitée (29) pour la fermeture de l'embrayage à crabot.

10. Agencement selon la revendication 8 ou 9, **caractérisé en ce que** l'espace de piston (7C) associé à la première surface pouvant être sollicitée (28) est connecté à un canal d'alimentation en fluide sous pression (30) et **en ce que** l'espace de piston (8C) associé à la deuxième surface pouvant être sollicitée (29) est connecté à un canal d'alimentation en fluide sous pression (31).

11. Agencement selon l'une quelconque des revendications précédentes, **caractérisé en ce que** le piston d'actionnement (5, 5A, 5C) est accouplé par le biais de plusieurs doigts d'entraînement (15) faisant saillie radialement à travers l'arbre d'entraînement (1) au crabot d'accouplement (9, 9A, 9C) en vue du déplacement axial.

12. Agencement selon l'une quelconque des revendications 1 à 10, **caractérisé en ce que** le crabot d'accouplement (9, 9A, 9C) peut être actionné par le biais d'au moins un boulon (34) faisant saillie à travers l'arbre d'entraînement (1) du piston d'actionnement (5, 5A, 5C).

13. Agencement selon l'une quelconque des revendications précédentes, **caractérisé en ce que** le crabot d'accouplement (9, 9A, 9C) et l'élément conjugué correspondant (17) peuvent être connectés à la couronne dentée à commuter (2) par le biais d'une denture de couronne commune (18).

14. Agencement selon l'une quelconque des revendications 1 à 12, **caractérisé en ce que** le crabot d'accouplement (5B) et l'élément conjugué correspondant sur la roue solaire à commuter (3) peuvent être connectés par le biais d'une denture enfichable commune (32).

15. Agencement selon la revendication 13 ou 14, **caractérisé en ce que** la denture de couronne (18) ou la denture enfichable (32) sont réalisées sous forme bombée et/ou conique ou avec une contre-dépouille et/ou du côté frontal avec un biseau ou avec un rayon et/ou avec un cône de centrage.

16. Agencement selon l'une quelconque des revendications précédentes, **caractérisé en ce que** le crabot d'accouplement (9, 9A, 9C) est connecté de manière solidaire en rotation et déplaçable axialement par le biais d'une denture enfichable (33) à l'arbre d'entraînement (1).

17. Agencement selon l'une quelconque des revendications précédentes, **caractérisé en ce qu'**un arbre d'entraînement (1) peut être connecté de manière commutable en tant qu'arbre par le biais de l'embrayage à crabot à une couronne dentée (2) ou à une roue solaire (3) du train planétaire (4) d'une transmission automatique.
